# EUROPEAN PATENT APPLICATION

(11) **EP 4 066 928 A1**
(43) Date of publication of application: **05.10.2022**
(21) Application number: 20894227.6
(22) Date of filing: 11.11.2020
(51) Int. Cl.: B01D 71/70, C09D 183/04, C09D 7/20, C09D 7/62

(54) **MEMBRANE FORMATION COMPOSITION, AND GAS PERMEATION MEMBRANE**

(30) Priority: 28.11.2019 JP 2019215763
(71) Applicant: Nissan Chemical Corporation, Tokyo 103-6119 (JP)
(72) Inventor: ODAKA, Kazutoshi, Funabashi-shi, Chiba 274-0052 (JP)
(74) Representative: Hoffmann Eitle
(86) International application number: PCT/JP2020/042086
(87) International publication number: WO 2021/106569

(57) **Abstract**

The invention is directed to a membrane-forming composition containing a silicone, a silicone-dissolving solvent, surface-modified microparticles, and a particular solvent which is a compound having one or more oxygen or one or more nitrogen atoms and which has a dielectric constant of 1 to 30.

## Description

### Technical Field

The present invention relates to a membrane-forming composition containing silicone, a solvent for silicone, and surface-modified microparticles, wherein the microparticles are uniformly dispersed in the silicone and the solvent. More particularly, the invention relates to such a composition for forming a gas separation membrane.

### Background Art

Compositions containing a silicon resin and microparticles dispersed therein, and membrane products obtained from such compositions find use in a refractive index-regulating material, a semiconductor encapsulant, various separation materials, and many other materials. A key factor to maximally attain the characteristics of such materials is to attain a uniform dispersion state of the microparticles in the silicon resin. Thus, various dispersing techniques have been investigated. For example, there have been reported a technique including addition of a surfactant or a leveling agent, a technique including surface chemical modification of particles, and other techniques (Patent Document 1).

Regarding such techniques, the present inventors previously found that dispersibility of particles in various resin matrices was enhanced through chemical modification of the surfaces of the particles (Patent Documents 2 and 3).

Meanwhile, it has been known that such microparticles having chemically modified surfaces fail to attain favorable dispersibility in some solvents. Particularly in the case of a silicone-soluble solvent, the dispersibility of such microparticles in the solvent is unsatisfactory. Therefore, when an attempt is made to disperse the surface-modified microparticles in silicone and a solvent for the silicone, aggregation or sedimentation occurs. As a result, membrane products obtained from such compositions have poor flatness, which is problematic.

In addition, as described in Patent Document 4, once particles surface-modified with a polymer or the like have been thoroughly dried, difficulty is encountered in redispersing the particles in silicone. Even in such a case, if appropriate means such as use of a dispersant and wet pulverization or the like is employed, the particles can be re-dispersed. However, more dispersion steps are required. In the case of silica microparticles, the microparticles cannot be completely crushed in most cases, and aggregates of the microparticles remain. Thus, employment of the surface modification technique is limited only to a gas separation membrane having a thickness of some hundreds of micrometers, which is also problematic.

### Prior Art Documents

### Patent Documents

Patent Document 1: Japanese Patent Application Laid-Open (kokai) No 2017-119848
Patent Document 2: WO 2017/179738
Patent Document 3: WO 2018/038027
Patent Document 4: Japanese Patent Application Laid-Open (kokai) No 2012-224777

### Summary of the Invention

### Problems to be Solved by the Invention

As mentioned above, the aforementioned technique of prior art encounters difficulty in uniformly dispersing surface-modified microparticles in silicone. Although dispersibility of such microparticles can be improved by employing a customary dispersing technique (e.g., addition of a surfactant or pulverization), adaptability of the additional technique with respect to membrane formation must be carefully assessed. Specifically, due to adverse effects of additives on the performance of resin, bleeding out of additives, presence of residual aggregated microparticles, and the like, the intended target function of the produced microparticles may be impaired.

Under such circumstances, the present inventors conducted extensive studies on the ingredients and mixing conditions for dispersing surface-modified microparticles uniformly in silicone and a solvent for dissolving silicone (hereinafter may be referred to as a "silicone-dissolving solvent"). Thus, an object of the present invention is to provide a membrane-forming composition which can form a silicone coating film having excellent flatness and particledispersibility. By focusing on the dielectric constant of solvent, the present inventors have found that, when the dielectric constant of a solvent falls within a specific range, the solvent is highly compatible with silicone and a silicone-dissolving solvent. The inventors have also found a membrane-forming composition which contains a hetero-atom-having particular solvent for inducing interaction between surface-modified microparticles and the solvent system. Means for Solving the Problems

Accordingly, the present invention is directed to a membrane-forming composition as described in any one of the following aspects 1 to 11.
Aspect 1: a membrane-forming composition comprising a silicone, a solvent for dissolving the silicone, surface-modified microparticles, and a particular solvent which is a compound having one or more oxygen or one or more nitrogen atoms and which has a dielectric constant of 1 to 30.
Aspect 2: a membrane-forming composition according to aspect 1, wherein the particular solvent has a dielectric constant of 1 to 25.
Aspect 3: a membrane-forming composition according to aspect 1, wherein the particular solvent has a dielectric constant of 2 to 20.
Aspect 4: a membrane-forming composition according to any of aspects 1 to 3, wherein the surface-modified microparticles are formed of one or more species selected from among silica, zirconia, ceria, titania, alumina, and a clay mineral. Aspect 5: a membrane-forming composition according to aspect 4, wherein the surface-modified microparticles are formed of silica.
Aspect 6: a membrane-forming composition according to aspect 5, wherein the surface-modified microparticles are silica microparticles having a surface to which a dendrimer or a hyperbranched polymer has been added.
Aspect 7: a membrane-forming composition according to any of aspects 1 to 6, wherein the particular solvent is one or more species selected from the group consisting of a monohydric alcohol, a monoester, a monoketone, and an ether.
Aspect 8: a membrane-forming composition according to any of aspects 1 to 7, which is a gas separation membrane-forming composition.
Aspect 9: a gas separation membrane formed by use of a membrane-forming composition as recited in any of aspects 1 to 8.
Aspect 10: a semiconductor encapsulant formed by use of a membrane-forming composition as recited in any of aspects 1 to 8.
Aspect 11: a gas barrier material formed by use of a membrane-forming composition as recited in any of aspects 1 to 8.

### Effects of the Invention

According to the present invention, a particular solvent which is a compound having one or more oxygen or one or more nitrogen atoms and which has a dielectric constant of 1 to 30 is incorporated into a silicone and a silicone-dissolving solvent, and surface-modified microparticles are mixed with the silicone resin without drying the microparticles. Thus, a membrane-forming composition in which surface-modified microparticles are uniformly dispersed can be yielded. As a result, there can be provided a silicone membrane in which surface-modified microparticles are uniformly dispersed, by virtue of excellent film formability of the composition. Also, since the dispersibility of the surface-modified microparticles is favorable, a gas separation membrane of interest can be formed with no limitation of membrane thickness.

### Brief Description of the Drawings

[Fig. 1] An SEM image of a surface of a membrane according to Example 13.
[Fig. 2] An SEM image of a cross-section of a membrane according to Example 13.
[Fig. 3] An SEM image of a surface of a membrane according to Comparative Example 7.

### Modes for Carrying Out the Invention

The present invention will next be described in detail. The microparticles used in the present invention are nanoparticles having a nano-order mean particle size. No particular limitation is imposed on the material of the microparticles, but inorganic microparticles are preferred. Notably, the term "nanoparticles" refers to particles having a mean primary particle size of 1 nm to 1,000 nm, particularly 2 nm to 500 nm. The mean primary particle size is determined through the nitrogen adsorption method (BET method).

Examples of the material of the inorganic microparticles include metal oxides such as silica, zirconia, ceria, titania, and alumina, and clay minerals such as phyllosilicate compounds. Among them, silica microparticles are preferred, with surface-modified silica microparticles being more preferred.

As silica microparticles, there may be employed spherical nanoparticles or irregularly shaped silica nanoparticles such as rod-like shape silica nanoparticles, beaded shape silica nanoparticles, and confeito-like (or rock candy-like) shape silica nanoparticles, to thereby provide a gas separation membrane having considerably improved gas permeability. As irregularly shaped silica nanoparticles, those disclosed in WO 2018-038027 may be used. Examples of such irregularly shaped silica nanoparticles include (1) rod-like shape silica nanoparticles, which have a ratio D1/D2 of ≥4, wherein D1 is a particle size determined through a dynamic light scattering method, and D2 is a particle size determined through the nitrogen gas adsorption method; which have a D1 of 40 to 500 nm; and which have a uniform diameter of 5 to 40 nm as observed under a transmission electron microscope; (2) beaded shape silica nanoparticles which are formed of colloidal silica spherical particles having a particle size D2 determined through the nitrogen gas adsorption method of 10 to 80 nm, and silica which binds together the colloidal silica spherical particles; which have a ratio D1/D2 of ≥3, wherein D1 is a particle size determined through the dynamic light scattering method, and D2 is a particle size of the colloidal silica spherical particles determined through the nitrogen gas adsorption method; which have a D1 of 40 to 500 nm; and which are formed of the colloidal silica spherical particles connected together; and (3) confeito-like shape silica nanoparticles which have a mean surface roughness S2/S3 of 1.2 to 10, wherein S2 is a specific surface area determined through the nitrogen gas adsorption method, and S3 is a specific surface area obtained by reducing a mean particle size D3 determined through image analysis; which have a D3 of 10 to 60 nm; and which have a plurality of wart-shaped projections on the surfaces thereof.

Notably, irregularly shaped silica nanoparticles are more preferably surface-modified, irregularly shaped silica nanoparticles.

The surface-modified silica preferably has a surface onto which a functional group has been introduced. The functional group-introduced surface-modified silica may be formed by treating a silane compound having a hydrophilic group with silica under heating conditions. Examples of the silane compound having a hydrophilic group include aminopropyltriethoxysilane (APTES).

Examples of the surface-modified silica nanoparticles include silica nanoparticles having a surface to which a dendrimer or a hyperbranched polymer has been added. Next, the dendrimer- or hyperbranched polymer-added surface modified silica nanoparticles will be described in detail, with an example of production method therefor.

In the production of the dendrimer- or hyperbranched polymer-added surface modified silica, firstly, silica particles are dispersed in a first solvent and treated with a reactive functional group-containing compound having a functional group that reacts with a hyperbranch-forming monomer or a dendrimer-forming monomer. Through this treatment, the reactive functional group is added to the silica surface, whereby reactive functional group-modified silica nanoparticles are yielded. A preferred reactive functional group-containing compound is a silane coupling agent, for example, an amino group-terminated compound represented by formula (1): 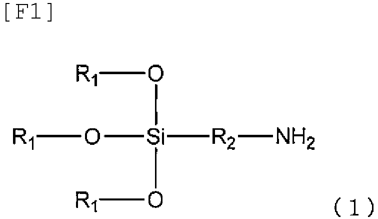 (wherein R₁ represents a methyl group or an ethyl group, R₂ represents an optionally substituted C1 to C5 alkylene group, an amido group, or an aminoalkylene group).

In the silane coupling agent represented by formula (1), the amino group is preferably bound to the end of the compound. However, the amino group may be bound to another position.

Examples of typical compounds represented by formula (1) include 3-aminopropyltriethoxysilane and 3-aminopropyltrimethoxysilane. Examples of the amino group-containing silane coupling agent include 3-ureidopropyltrimethoxysilane, 3-ureidopropyltriethoxysilane, 3-(2-aminoethylamino)propyltriethoxysilane, and 3-(2-aminoethylamino)propyltrimethoxysilane.

The reactive functional group-containing compound may have another group other than an amino group. Examples of such groups include an isocyanato group, a mercapto group, a glycidyl group, a ureido group, and a halogen group.

Examples of the silane coupling agent having a functional group other than an amino group include 3-isocyanatopropyltriethoxysilane, 3-mercaptopropylmethyldimethoxysilane, 3-mercaptopropyltrimethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, 3-ureidopropyltriethoxysilane, and 3-chloropropyltrimethoxysilane.

The reactive functional group-containing compound used in the present invention is not necessarily a trialkoxysilane compound represented by formula (1). For example, the reactive functional group-containing compound may be a dialkoxysilane compound or a monoalkoxysilane compound.

The functional group of the reactive functional group-containing compound which group reacts with the silanol group of silica nanoparticles may be a group other than an alkoxy group, for example, an isocyanato group, a mercapto group, a glycidyl group, a ureido group, or a halogen atom.

In the treatment of silica nanoparticles with the reactive functional group-containing compound, the silica nanoparticles are dispersed in water or a C1 to C4 alcohol, and the reactive functional group-containing compound is added to the dispersion. The mixture is stirred.

As described above, chemical addition of reactive functional groups onto the surfaces of the silica nanoparticles may be carried out via a single-step reaction or, if required, a 2 or more-step reaction. A specific example of the 2-step reaction will be described in the preparation of carboxyl group-modified silica nanoparticles. Firstly, shaped silica nanoparticles are treated with aminoalkyltrialkoxysilane as described above, to thereby prepare amino group-modified silica nanoparticles. Subsequently, the amino group-modified silica nanoparticles are treated with a dicarboxylic acid compound represented by formula (2): [F2]

HOOC-R₃-COOH (2)

(wherein R₃ represents an optionally substituted C1 to C20 alkylene group or an optionally substituted C6 to C20 aromatic group) or an acid anhydride thereof, to thereby prepare reactive functional group-bound silica nanoparticles wherein the reactive functional group has a carboxyl group at its terminal.

Examples of the compound represented by formula (2) include malonic acid, adipic acid, and terephthalic acid. The dicarboxylic acid compound is not limited to those represented by formula (2).

In the case of bonding the reactive functional group to the surfaces of silica nanoparticles through a three or more-step reaction, a monomer represented by the following formula (3) (i.e., a monomer having amino groups at both terminals) [F3]

H₂N-R₄-NH₂ (3)

(wherein R₄ represents a C1 to C20 alkylene group or (C₂H₅-O-)ₚ and/or (C₃H₇-O-)_{q}, and each of p and q is an integer of ≥1) is bound to silica nanoparticles which have been treated with a compound represented by formula (1) and then with a compound represented by formula (2), to thereby prepare surface-modified silica nanoparticles, wherein the surface modification group has an amino group at its terminal. This reaction is repeated.

Examples of the monomer represented by formula (3) include ethylenediamine, polyoxyethylenebisamine (molecular weight: 2,000), and O,O'-bis(2-aminopropyl)polypropylene glycol-block-polyethylene glycol (molecular weight: 500).

A subsequent reaction may be carried out after changing the solvent of the thus-prepared first solvent dispersion of the reactive functional group-modified silica nanoparticles to a second solvent.

The second solvent has hydrophobicity higher than that of the first solvent. The second solvent is preferably at least one species selected from among tetrahydrofuran (THF), N-methylpyrrolidone (NMP), dimethylacetamide (DMAc), dimethylformamide (DMF), and γ-butyrolactone (GBL). The second solvent may be a solvent mixture.

No particular limitation is imposed on the method of substituting the first solvent by the second solvent. In one mode of substitution, a first solvent dispersion of the reactive functional group-modified silica nanoparticles is concentrated, and then the thus-obtained wet precipitates are re-dispersed in the second solvent. In an alternative mode, a first solvent dispersion of the reactive functional group-modified silica nanoparticles is not dried and is subjected to solvent substitution, wherein the second solvent is charged while the first solvent is distilled out.

After the above solvent substitution, the second solvent dispersion of the reactive functional group-modified silica nanoparticles is used. In the presence of the second solvent, a dendrimer or a hyperbranched polymer, having a multi-branched structure, is bound to the reactive functional group-modified silica nanoparticles. More specifically, a dendrimer-forming monomer or a hyperbranched polymer-forming monomer is reacted with the second solvent dispersion of the reactive functional group-modified silica nanoparticles, to thereby prepare silica nanoparticles to which the hyperbranched polymer or the dendrimer has been bound. Thus, a second solvent dispersion of the hyperbranched polymer- or dendrimer-bound silica nanoparticles is yielded.

The hyperbranched polymer-forming monomer used in the present invention is preferably a compound having one carboxyl group and two amino groups and represented by the following formula (4): 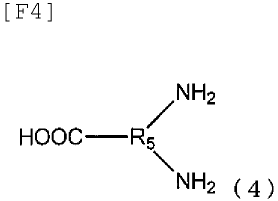 (wherein R₅ represents an optionally substituted C1 to C20 alkylene group or an optionally substituted C6 to C20 aromatic group) or may be such a compound having 3 or more amino groups. R₅ may be a group other than the C1 to C20 alkylene group or the C6 to C20 aromatic group. Examples of the hyperbranched polymer-forming monomer represented by formula (4) include 3,5-diaminobenzoic acid and 3,5-diamino-4-methylbenzoic acid.

Alternatively, the hyperbranched polymer-forming monomer used in the present invention may be a compound having one carboxyl group and two halogen atoms and represented by the following formula (5): 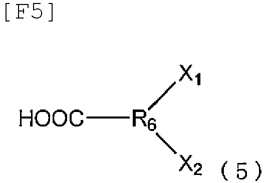 (wherein R₆ represents an optionally substituted C1 to C20 alkylene group or an optionally substituted C6 to C20 aromatic group, and each of X₁ and X₂ represents a halogen atom).

Examples of the compound represented by formula (5) include 3,5-dibromo-4-methylbenzoic acid, 3,5-dibromosalicylic acid, and 3,5-dibromo-4-hydroxy-benzoic acid.

The hyperbranched polymer-forming monomer is not limited to the aforementioned compound having one carboxyl group and two or more amino groups or having one carboxyl group and two or more halogen atoms. Any monomer capable of forming a hyperbranched polymer may be appropriately selected depending on the type of the reactive functional group of the modified silica nanoparticles.

In the case where the surfaces of silica nanoparticles are modified with a carboxyl group through a 2-step reaction, a hyperbranched polymer may be bound to the modified silica nanoparticles by use of a compound having one amino group and two carboxyl groups and represented by the following formula (6) : 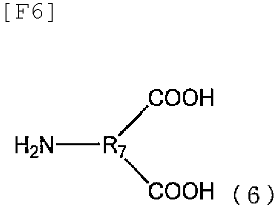 (wherein R₇ represents a C1 to C20 alkylene group or an optionally substituted C6 to C20 aromatic group).

Examples of the compound represented by formula (6) include 2-aminoterephthalic acid, 4-aminoterephthalic acid, and DL-2-aminosuberic acid.

As the hyperbranched polymer-forming monomer, there may be used an additional monomer having one amino group and two or more halogen atoms and represented by the following formula (7): 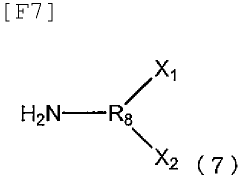 (wherein R₈ represents an optionally substituted C1 to C20 alkylene group or an optionally substituted C6 to C20 aromatic group, and each of X₁ and X₂ represents a halogen atom).

Examples of the compound represented by formula (7) include 3,5-dibromo-4-methylaniline and 2,4-dibromo-6-nitroaniline.

In the case of using the silica nanoparticles having surfaces modified with a carboxyl group through the aforementioned 2-step reaction, similar to the case of using the silica nanoparticles having surfaces modified with an amino group through the aforementioned 1-step reaction, the compounds of the formulas (6) and (7) may have two or more carboxyl groups or two or more halogen atoms, and an additional monomer having a functional group (other than an amino group) capable of reacting with a carboxyl group may be used.

The single polymer chain of the hyperbranched polymer formed through the aforementioned reaction preferably has a weight average molecular weight of, for example, about 200 to about 2,000,000, and preferably has a branching degree of about 0.5 to about 1.

In the reaction, the hyperbranched polymer-forming monomer is dissolved in the second solvent (i.e., one or more solvents selected from among tetrahydrofuran (THF), N-methylpyrrolidone (NMP), dimethylacetamide (DMAc), dimethylformamide (DMF), and γ-butyrolactone (GBL)); subsequently benzotriazol-1-yloxytris(dimethylamino)phosphonium hexafluorophosphate (BOP) (i.e., a carboxylic acid activating reagent) and triethylamine (i.e., a nucleophilic reagent) are added to the solution, and the mixture is agitated. Then, the amino group-modified silica nanoparticles are added to the mixture, and the resultant mixture is agitated. The aforementioned combination of BOP and triethylamine may be replaced with another combination. For example, the carboxylic acid activating reagent may be triphenylphosphine, and the nucleophilic reagent may be pyridine.

Dendrimer-bound silica nanoparticles will next be described. Now will be described addition of a dendrimer to amino group-modified silica nanoparticles.

In the present invention, for addition of a dendrimer to amino group-modified silica nanoparticles of the present invention, a monomer represented by the following formula (8) (e.g., a monomer having three carboxyl groups) or a monomer having four or more carboxyl groups must be bound to the amino group-modified silica nanoparticles. Examples of the monomer used include trimesic acid and pyromellitic acid. 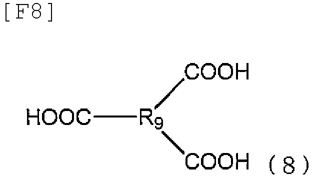 (In formula (8), Rg represents an optionally substituted C1 to C20 alkylene group or an optionally substituted C6 to C20 aromatic group.)

The aforementioned addition of a monomer having three carboxyl groups or a monomer having four or more carboxyl groups is followed by addition of a monomer having two amino groups at both terminals and represented by the following formula (3):

[F9]

H₂N-R₄-NH₂ (3)

(wherein R₄ represents a C1 to C20 alkylene group or (C₂H₅-O-)ₚ and/or (C₃H₇-O-)_{q}, and each of p and q is an integer of ≥1). Through repetition of such addition steps, dendrimermodified silica nanoparticles are prepared.

In the case of using the silica nanoparticles modified with a carboxyl group (i.e., a functional group) through the aforementioned 2-step reaction, the carboxyl group-modified silica nanoparticles are treated with a monomer having three amino groups or a monomer having four or more amino groups and represented by the following formula (9): 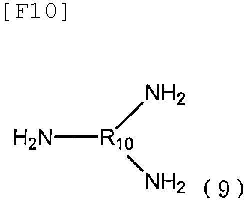 (wherein R₁₀ represents an optionally substituted C1 to C20 alkylene group or an optionally substituted C6 to C20 aromatic group). Examples of the monomer having three amino groups include 1,2,5-pentanetriamine, and examples of the monomer having four or more amino groups include 1,2,4,5-benzenetetraamine.

Subsequently, a monomer having two terminal carboxyl groups and represented by the following formula (10): [F11]

HOOC-R₁₁-COOH (10)

(wherein R₁₁ represents a C1 to C20 alkylene group, or (C₂H₅-O-)ₚ and/or (C₃H₇-O-)_{q}, and each of p and q is an integer of ≥1) is bound to the resultant silica nanoparticles. Examples of the monomer include succinic acid, levulinic acid, and O,O'-bis[2-(succinylamino)ethyl]polyethylene glycol (molecular weight: 2,000).

This addition is repeated to thereby prepare silica nanoparticles having surfaces modified with a dendrimer. The dendrimer-forming monomer may have a group other than an amino group or a carboxyl group.

The thus-prepared second solvent dispersion of hyperbranched polymer- or dendrimer-bound, surface-modified silica nanoparticles is mixed with a matrix resin. Finally, the mixture is formed into a membrane. Notably, before mixing of the hyperbranched polymer- or dendrimer-bound silica nanoparticles with a matrix resin, the hyperbranched polymer- or dendrimer-bound silica nonoparticles may be dried. Alternatively, at least a portion of the second solvent may be replaced with another second solvent or a solvent other than the second solvent.

In the present invention, silicone is used as the matrix resin. The silicone used in the invention may be a silicon resin generally employed for forming a membrane. No particular limitation is imposed on the silicone, and examples include commercial silicone products such as Silicone YSR3022 and Silicone TSE382 (products of Momentive), KS-847T, KE44, KE45, KE441, and KE445 (products of Shin-Etsu Chemical Co., Ltd.), and SH780 and SE5007 (products of Toray Dow Corning).

Alternatively, a silicone synthesized from a diorganopolysiloxane compound (as a monomer) may also be used. Yet alternatively, one or more species of a modified silicone and a silicone defoaming agent may be added to the silicone matrix resin.

The silicone may be used in combination with a cross-linking agent. The cross-linking agent is used for elevating cross-linking density and enhancing heat resistance and durability. For example, when a hydroxyl-terminated silicone is used, a silane compound having a plurality of hydrolyzable functional groups or a partial hydrolysis/condensation product thereof may be used as a cross-linking agent. No particular limitation is imposed on the silane compound, and specific examples include oximesilanes such as methyltris(diethylketoxime)silane, methyltris(methylethylketoxime)silane, vinyltris(methylethylketoxime)silane, and pheyltris(diethylketoxime)silane; alkoxysilanes such as methyltrimethoxysilane, methyltriethoxysilane, vinyltrimethoxysilane, vinyltriethoxysilane, phenyltrimethoxysilane, tetramethoxysilane, and tetraethoxysilane; acetoxysilanes such as methyltriacetoxysilane and ethyltriacetoxysilane; aminophenyltriethoxysilane-type silanes such as methyltris(dimethylamino)silane, methyltris(diethylamino)silane, methyltris(N-methylacetamido)silane, and vinyltris(N-ethylacetamido)silane; and aminoxysilanes such as methyltris(dimethylaminoxy)silane and methyltris(diethylaminoxy)silane. In the case of additionally using a cross-linking agent, the amount of the cross-linking agent is preferably about 0.1 mass% to about 20 mass%, with respect to silicone.

The ratio by mass of silicone resin to microparticles is, for example, 99/1 to 20/80, preferably 95/5 to 40/60, more preferably 90/10 to 50/50.

The silicone-dissolving solvent preferably has low polarity. From the viewpoint of resistance to spontaneous evaporation at ambient temperature during membrane formation, the boiling point of the solvent is preferably 60 to 200°C. Examples of the silicone-dissolving solvent include n-paraffins, iso-paraffins, aromatics, and naphthenes (e.g., hexane, heptane, octane, isooctane, decane, cyclohexane, toluene, and xylene). Among them, decane and nonane are particularly preferred.

In addition to the silicone-dissolving solvent, the membrane-forming composition of the present invention contains another solvent which is a compound having one or more oxygen or one or more nitrogen atoms and which has a dielectric constant of 1 to 30, for enhancing dispersibility of microparticles. As used herein, the term "dielectric constant" refers to a ratio of permittivity of a solvent to that of vacuum. The dielectric constants of various solvents are disclosed in the reference (National Bureau of Standards Circular 514, 1951).

As described above, the solvent for enhancing dispersibility of particles is a particular solvent which is a compound having one or more oxygen or one or more nitrogen atoms and which has a dielectric constant of 1 to 30. The dielectric constant of the solvent is preferably 1 to 25, more preferably 1 to 20. No particular limitation is imposed on the particular solvent,
and examples of preferred members include a monohydric alcohol, a monoether, a monoester, and a monoketone, each having a hydrocarbon main chain. In particular, specific examples include n-hexanol, n-heptanol, 4-heptanol, n-butanol, isopropanol, cyclohexanol, tetrahydrofuran (THF), propylene glycol monomethyl ether (PGME), cyclopentanone, and a mixture of two or more members thereof.

No precise reason has been elucidated for why the particular solvent which is compound having one or more oxygen or one or more nitrogen atoms and which has a dielectric constant of 1 to 30 can enhance the dispersibility of microparticles. However, two generally conceivable reasons therefor are as follows. Firstly, the particular solvent employed in the present invention is an amphiphilic compound having a hydrophilic moiety and a hydrophobic moiety, and the particles to be dispersed have a hydrophilic moiety on the surfaces thereof. Thus, the intrinsic stabilizing effect of dispersant is exerted. Secondly, silicone adsorbs on the surfaces of particles to be dispersed by the mediation of terminal silanol groups and siloxane bond moieties thereof, to thereby provide a steric hindrance effect of the polymer.

When n-hexanol is used as the particular solvent, the mass ratio of silicone resin to solvent is, for example, 1/99 to 50/50, preferably 1/99 to 30/70, more preferably 2/98 to 10/90.

The particular solvent content of the entire solvent is adjusted to 0.01 to 70 mass%, preferably 0.1 mass% to 50 mass%, more preferably 0.1 mass% to 30 mass%.

In any case, the amount of the aforementioned microparticles with respect to the entire mass of the membrane-forming composition is adjusted to 0.01 mass% to 50 mass%, preferably 0.1 mass% to 15 mass%.

Into the membrane-forming composition of the present invention containing a silicone-dissolving solvent, a particular solvent which is a compound having one or more oxygen or one or more nitrogen atoms and which has a dielectric constant of 1 to 30 is incorporated in order to enhance particle dispersibility. Under such circumstances, the silicone-dissolving solvent is preferably compatible with the particular solvent which is compound having one or more oxygen or one or more nitrogen atoms and which has a dielectric constant of 1 to 30.

In the case where the particular solvent which is a compound having one or more oxygen or one or more nitrogen atoms and which has a dielectric constant of 1 to 30 can dissolve silicone, the particular solvent may also serve as the silicone-dissolving solvent. In this case, the membrane-forming composition of the present invention may contain a single-component solvent.

In the membrane-forming composition of the present invention, co-presence of the particular solvent with the silicone and the silicone-dissolving solvent leads to remarkable enhancement in microparticle dispersibility.

The membrane-forming composition of the present invention readily achieves a favorable dispersion state by agitation means such as a mixer. If needed, ultrasonication, a wet jet-mill treatment, a wet bead-mill treatment, a highpressure homogenizer treatment, and the like may be performed. Through such an additional treatment, the dispersion state is further enhanced.

In the case of a monohydric alcohol having a hydrocarbon main chain, a favorable dispersion state of microparticles can be attained through agitation alone, so long as the dielectric constant falls within a range of 1 to 30. In this case, no ultrasonication is needed. In the cases of a monoether, a monoester, a monoketone, and another solvent, each having a hydrocarbon main chain, a favorable dispersion state of microparticles can be attained, so long as the dielectric constant falls within a range of 1 to 30. In these cases, when the dielectric constant is 1 to 10, or 18 to 30, preferably, dispersion is conducted through agitation and post ultrasonication.

In the membrane production method, the aforementioned composition is applied onto a substrate, and the solvents are evaporated. No particular limitation is imposed on the material or surface state of the substrate to which the composition is applied, so long as the substrate is not deteriorated by the solvent. Examples of the substrate include a silicon wafer, a glass substrate, PET, and PAN film, each having no surface irregularities. A non-woven fabric substrate having micropores in a surface portion thereof may also be used, and examples of the substrate material include polyether-sulfone (PES), polysulfone (PSF), polypropylene (PP), polyethylene (PE), polytetrafluoroethylene (PTFE), polyimide, polyamide, cellulose acetate, triacetate, polyacrylonitrile, and epoxy resin.

The application method is preferably a method which can attain uniform coating on a substrate. No particular limitation is imposed on the application method, and there may be employed known coating methods and techniques including dip coating (immersion), spin coating, blade coating, spray coating, bar coater coating, microgravure coating, gravure coating, and slot die coating. Among them, blade coating is preferred, with doctor blade coating being particularly preferred.

The present invention will next be described in detail by way of examples, which should not be construed as limiting the invention thereto.

### Examples

The following Examples are described. Notably, dielectric constants described in the Examples are disclosed in the following Documents.
Document 1: National Bureau of Standards Circular 514, 1951
Document 2: Handbook of Chemistry 2, Pure Chemistry II, 5th ed., edited by The Chemical Society of Japan, published by MARZEN Publishing, 621, 2014
Document 3: Japanese Patent Application Laid-Open (kokai) No. 2015-191090

### [Synthesis of surface-modified silica ST-G1]

To a four-neck, round-bottom flask (1,000 mL) equipped with a condenser, a thermometer, and an agitator, there were added a silica dispersion in isopropanol (IPA) (IPA-ST, product of Nissan Chemical Corporation, silica concentration: 30.5 mass%, mean primary particle size: 12 nm) (491.80 g), ultrapure water (2.69 g), and IPA (2494.5 g), and the mixture was heated to reflux under agitation. Thereafter, APTES (product of Tokyo Chemical Industry Co., Ltd.) (11.03 g) was added thereto, and the resultant mixture was agitated for 1 hour under reflux, to thereby prepare a dispersion. While IPA and water were removed from the obtained dispersion by means of an evaporator, 1-methyl-2-pyrrolidone (NMP) was added. The water content of the solution was confirmed by means of a Karl Fischer moisture meter. When the water content reached 0.1 mass% or less, this operation was stopped. Thereafter, the APTES-modified silica content was adjusted to about 5.4 mass% by use of NMP. The thus-obtained solution was employed as an ST-G0-NMP sol.

To a four-neck, round-bottom flask (1,000 mL) equipped with a condenser, a thermometer, and an agitator, there were added the ST-G0-NMP sol (the entire amount), 1,3-diaminobenzoic acid (DABA) (product of Aldrich) (22.75 g), triethylamine (TEA) (product of Kanto Chemical Co., Inc.) (15.13 g), and benzotriazol-1-yloxytris(dimethylamino)phosphonium hexafluorophosphate (BOP) (product of Tokyo Chemical Industry Co., Ltd.) (66.12 g), and the mixture was agitated at room temperature for 5 minutes. The mixture was heated at 80°C and allowed to react for 1 hour. The thus-obtained reaction mixture was filtered through filter paper (pore size: 7 µm), and the filtrate was added to a 9-fold volume (with respect to the reaction mixture) of methanol, followed by allowing the mixture to stand. Subsequently, the supernatant was removed, and the equiamount of methanol was added again. The resultant mixture was stirred and allowed to stand. The washing procedure was performed five times in total to complete. The thus-yielded solution was employed as ST-G1-methanol sol.

### [Preparation of ST-G1/silicone dispersion]

Silicone YSR3022 (product of Momentive) and ST-G1-methanol sol were added to an eggplant-shaped flask, so that the ratio by mass of silicone to ST-G1 was adjusted to 9/1. Subsequently, toluene in an amount equivalent to that of ST-G1-methanol sol was added, and the mixture was stirred. Then, the solvent was removed by means of an evaporator to such an extent that toluene was not completely removed. Next, decane was added, and remaining toluene was distilled out. The final varnish concentration was adjusted to about 10 mass%. Notably, the varnish concentration is defined as the total solid content of silicone and ST-G1. Also, the solution is denoted by a "silicone dispersion."

### [Assessment of varnish dispersibility]

### (Example 1)

The thus-prepared silicone dispersion and n-hexanol (dielectric constant: 13.3, 25°C, Document 1) serving as a particular solvent were dispensed to screw cap tubes. The contents of each tube were diluted with decane so as to adjust the varnish concentration and the n-hexanol content to 5 mass% and 10 mass%, respectively. The dispersion samples were subjected to mixing by means of a mixing rotor (100 rpm for 1 hour) and then a planetary centrifugal mixer (Awatori Rentaro, product of Thinky Corporation) (2,000 rpm for 3 minutes). After completion of mixing, the screw cap tubes were allowed to stand for 3 hours, and dispersion stability of each varnish sample was assessed on the basis of the following ratings.

### [Ratings of assessment]

O: Absence of visually observed sediments and dispersion state retention of 90% or higher
X: Presence of visually observed sediments and/or dispersion state retention of lower than 90%

The "dispersion state retention" was defined by the following formula: Dispersion state retention (%) = [(top level of particle-dispersed layer as measured from tube bottom)/(top level of varnish as measured from tube bottom)]×100.

A dispersion state retention 100%: no settlement of microparticles was observed.

A dispersion state retention 0%: complete settlement of microparticle was observed.

### Example 2

The procedure of Example 1 was repeated, except that n-hexanol was changed to n-heptanol (dielectric constant: 12.1, 22°C, Document 1), to thereby prepare a varnish. The varnish was assessed in the same manner.

### Example 3

The procedure of Example 1 was repeated, except that n-hexanol was changed to 4-heptanol (dielectric constant: 6.1, 22°C, Document 1), to thereby prepare a varnish. The varnish was assessed in the same manner.

### Example 4

The procedure of Example 1 was repeated, except that n-hexanol was changed to n-butanol (dielectric constant: 17.1, 25°C, Document 1), to thereby prepare a varnish. The varnish was assessed in the same manner.

### Example 5

The procedure of Example 1 was repeated, except that n-hexanol was changed to isopropanol (dielectric constant: 18.3, 25°C, Document 1), to thereby prepare a varnish. The varnish was assessed in the same manner.

### Example 6

The procedure of Example 1 was repeated, except that n-hexanol was changed to PGME (dielectric constant: 12.3, 20°C, Document 3), to thereby prepare a varnish. The varnish was assessed in the same manner.

### Example 7

The procedure of Example 1 was repeated, except that n-hexanol was changed to cyclopentanone (dielectric constant: 16.3, -51°C, Document 1), to thereby prepare a varnish. The varnish was assessed in the same manner.

### Example 8

The procedure of Example 1 was repeated, except that n-hexanol was changed to cyclohexanol (dielectric constant: 15.0, 25°C, Document 1), to thereby prepare a varnish. The varnish was assessed in the same manner.

### Example 9

The procedure of Example 1 was repeated, except that n-hexanol was changed to methyl ethyl ketone (MEK) (dielectric constant: 18.5, 20°C, Document 1), and ultrasonication for 1 minute was added after the treatment with a planetary centrifugal mixer in the dispersing method, to thereby prepare a varnish. The varnish was assessed in the same manner.

### Example 10

The procedure of Example 9 was repeated, except that MEK was changed to tetrahydrofuran (THF) (dielectric constant: 7.5, 22°C, Document 2), to thereby prepare a varnish. The varnish was assessed in the same manner.

### Example 11

The procedure of Example 9 was repeated, except that MEK was changed to 1,4-dioxane (dielectric constant: 2.2, 25°C, Document 1), to thereby prepare a varnish. The varnish was assessed in the same manner.

### Example 12

The procedure of Example 9 was repeated, except that MEK was changed to ethyl acetate (dielectric constant: 6.0, 25°C, Document 1), to thereby prepare a varnish. The varnish was assessed in the same manner.

### Comparative Example 1

The procedure of Example 1 was repeated, except that n-hexanol was not used, to thereby prepare a varnish. The varnish was assessed in the same manner.

### Comparative Example 2

The procedure of Example 1 was repeated, except that n-hexanol was changed to 1,2-hexanediol, to thereby prepare a varnish. The varnish was assessed in the same manner.

### Comparative Example 3

The procedure of Example 1 was repeated, except that n-hexanol was changed to propylene glycol, to thereby prepare a varnish. The varnish was assessed in the same manner.

### Comparative Example 4

The procedure of Example 1 was repeated, except that n-hexanol was changed to N-methylpyrrolidone (NMP), to thereby prepare a varnish. The varnish was assessed in the same manner.

### Comparative Example 5

The procedure of Example 1 was repeated, except that n-hexanol was changed to dimethylacetamide (DMAc), to thereby prepare a varnish. The varnish was assessed in the same manner.

### Comparative Example 6

The procedure of Example 1 was repeated, except that n-hexanol was changed to dimethyl sulfoxide (DMSO), to thereby prepare a varnish. The varnish was assessed in the same manner.

**[Table 1]**

| | Varnish dispersion stability |
|---|---|
| Ex. 1 | O |
| Ex. 2 | O |
| Ex. 3 | O |
| Ex. 4 | O |
| Ex. 5 | O |
| Ex. 6 | O |
| Ex. 7 | O |
| Ex. 8 | O |
| Ex. 9 | O |
| Ex. 10 | O |
| Ex. 11 | O |
| Ex. 12 | O |
| Comp. Ex. 1 | X |
| Comp. Ex. 2 | X |
| Comp. Ex. 3 | X |
| Comp. Ex. 4 | X |
| Comp. Ex. 5 | X |
| Comp. Ex. 6 | X |

On the basis of the aforementioned study, the dispersion stability of the varnishes of Examples 1 to 12 was found to be higher than that of the varnishes of Comparative Examples 1 to 6.

### [Assessment of silicone film formability]

### Example 13

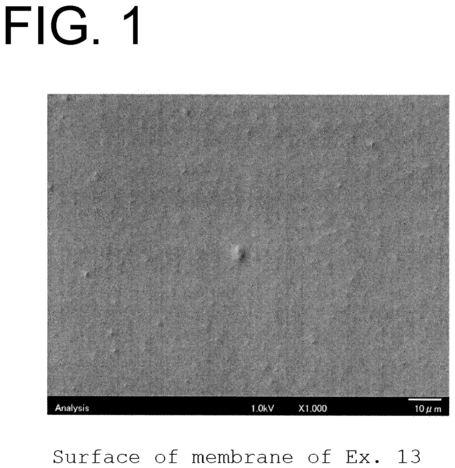

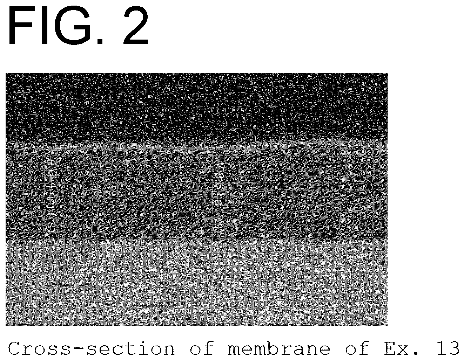

The varnish concentration of the varnish of Example 1 was changed to 2.5 mass%. The thus-provided varnish was agitated by means of Awatori Rentaro at 2,000 rpm for 3 minutes and then irradiated with ultrasonic waves for 1 minute. Subsequently, a curing agent (YC6831, product of Momentive) was added thereto so that the curing agent content was adjusted to 7 mass% with respect to silicone. The mixture was agitated by means of Awatori Rentaro at 2,000 rpm for 30 seconds, to thereby prepare a varnish. The thus-prepared varnish was applied onto a silicone substrate by means of a doctor blade (gap: 50 µm), and the applied varnish was dried on a hot plate at 120°C. The surface and cross-section of the formed membrane were observed under an SEM (FIGs. 1 and 2).

### Comparative Example 7

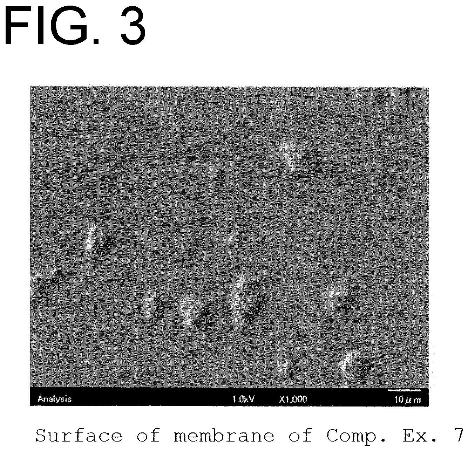

The varnish concentration of the varnish of Comparative Example 1 was changed to 2.5 mass%. The thus-prepared varnish was applied and assessed in the same manner as employed in Example 13 (FIG. 3).

As is clear from the observed SEM images, the membrane of Example 13 was found to exhibit more excellent flatness and particle dispersibility, as compared with the membrane of Comparative Example 7.

As described hereinabove, the varnish of the present invention was found to exhibit excellent stability in particle dispersibility and to serve as a composition capable of providing a membrane having high flatness and particle dispersibility.

## Claims

1. A membrane-forming composition comprising a silicone, a solvent for dissolving the silicone, surface-modified microparticles, and a particular solvent which is a compound having one or more oxygen or one or more nitrogen atoms and which has a dielectric constant of 1 to 30.

2. A membrane-forming composition according to claim 1, wherein the particular solvent has a dielectric constant of 1 to 25.

3. A membrane-forming composition according to claim 1, wherein the particular solvent has a dielectric constant of 2 to 20.

4. A membrane-forming composition according to any one of claims 1 to 3, wherein the surface-modified microparticles are formed of one or more species selected from among silica, zirconia, ceria, titania, alumina, and a clay mineral.

5. A membrane-forming composition according to claim 4, wherein the surface-modified microparticles are formed of silica.

6. A membrane-forming composition according to claim 5, wherein the surface-modified microparticles are silica microparticles having a surface to which a dendrimer or a hyperbranched polymer has been added.

7. A membrane-forming composition according to any one of claims 1 to 6, wherein the particular solvent is one or more species selected from the group consisting of a monohydric alcohol, a monoester, a monoketone, and an ether.

8. A membrane-forming composition according to any one of claims 1 to 7, which is a gas separation membrane-forming composition.

9. A gas separation membrane formed by use of a membrane-forming composition as recited in any one of claims 1 to 8.

10. A semiconductor encapsulant formed by use of a membrane-forming composition as recited in any one of claims 1 to 8.

11. A gas barrier material formed by use of a membrane-forming composition as recited in any one of claims 1 to 8.
